# EUROPEAN PATENT SPECIFICATION

(11) **EP 1 552 188 B1**
(45) Date of publication and mention of the grant of the patent: **29.06.2011**
(21) Application number: 03759663.2
(22) Date of filing: 01.10.2003
(51) Int. Cl.: F16H 7/12

(54) **TENSIONER**
SPANNER
TENDEUR

(30) Priority: 10.10.2002 US 269693
(43) Date of publication of application: 13.07.2005
(73) Proprietor: The Gates Corporation, Denver, CO 80202 (US)
(72) Inventor: ALI, Imtiaz, Michigan 48076 (US); DEC, Andrzej, Rocherster Hills, MI 48307 (US); SERKH, Alexander, Troy, MI 48098-4696 (US)
(74) Representative: Tunstall, Christopher Stephen
(86) International application number: PCT/US2003/031191
(87) International publication number: WO 2004/033933

(56) References cited:
- EP-A- 0 780 597
- WO-A-02/48577
- WO-A-03/027537
- US-A- 4 478 595
- US-A1- 2002 010 045
- US-A1- 2002 052 260
- PATENT ABSTRACTS OF JAPAN vol. 2000, no. 20, 10 July 2001 (2001-07-10) & JP 2001 059555 A (DENSO CORP;BANDO CHEM IND LTD), 6 March 2001 (2001-03-06)
- PATENT ABSTRACTS OF JAPAN vol. 013, no. 300 (M-848), 11 July 1989 (1989-07-11) & JP 01 093656 A (MITSUBOSHI BELTING LTD), 12 April 1989 (1989-04-12)

## Description

### Field of the Invention

The invention relates to a tensioner, and more particularly to a motorized tensioner that is electrically controlled in order to adjust a belt tension in a belt drive.

### Background of the Invention

Vehicle engines include among other things, accessories that are driven by the engine. Accessories may include a power steering pump, an air conditioning compressor, alternator and so on. Each of these accessories usually has a pulley that is connected by a belt to an engine crankshaft pulley. Each accessory is driven by the belt as the crankshaft rotates.

In order to operate efficiently it is necessary for the belt to be placed under a certain amount of preload or tension. This may be accomplished using known methods. A moveable shaft on one of the accessories may be mechanically adjusted to tension a belt. Another method includes use of a belt tensioner.

A belt tensioner comprises a spring imparting a force upon a lever arm. The lever arm typically comprises a pulley journaled thereto. The pulley is in contact with a belt to be tensioned. A biasing member such as a spring in the tensioner is used to impart and maintain a belt tension load. The belt load is a function of the geometry of the tensioner and drive, as well as the spring rate of the tensioner spring.

Actuators have been used to control a tensioner position, and thereby a belt tension. For example they are used to adjust a phase difference between a driver and driven pulley. The control signal is derived from the relative rotational phase of a driver pulley as compared to a driven pulley.

Representative of the art is U. S. pat. No. 5,733, 214 (1998) to Shiki et al. which discloses a system for adjusting the tension of an endless transmitting belt in an internal combustion engine comprising a control system for adjusting a tension to be applied from a tensioner to an endless belt based upon a phase angle between a driver and a driven pulley.

Reference is also made to co-pending U. S. patent application serial no. 10/147,032 filed May 15,2002.

International patent publication WO 02/48577 discloses a tensioning device for a belt drive comprising a tensioning roller that rests against a belt drive, thereby tensioning it, which constitutes the closest prior art.

What is needed is a motorized tensioner that is controllable in order to adjust a belt tension on a belt drive. What is needed is a motorized tensioner having an adjustable biasing member position. What is needed is a motorized tensioner having an asymmetric damping mechanism. The present invention meets these needs.

### Summary of the Invention

The primary aspect of the invention is to provide a motorized tensioner that is controllable in order to adjust a belt tension on a belt drive.

Another aspect of the invention is to provide a motorized tensioner having an adjustable biasing member position.

Another aspect of the invention is to provide a motorized tensioner having an asymmetric damping mechanism.

Other aspects of the invention will be pointed out or made obvious by the following description of the invention and the accompanying drawings.

The invention comprises a motorized tensioner that is controllable for adjusting a belt tension. The tensioner comprises a tensioner arm and a spring. One end of the spring is connected to a moveable member that is connected to a gearbox driven by an electric motor, whereby a spring position is adjustable. The other spring end is connected to a damping mechanism, which is in turn engaged with the tensioner arm. The motor and gearbox position the moveable member, and thereby a spring end, according to a control signal received from a controller. The spring end position determines the spring force and thereby the belt tension in the system. The damping mechanism frictionally interacts with a tensioner body to damp oscillatory movements of the tensioner arm.

### Brief Description of the Drawings

The accompanying drawings, which are incorporated in and form a part of the specification, illustrate preferred embodiments of the present invention, and together with a description, serve to explain the principles of the invention.
Fig. 1 is a front perspective view of an engine with an inventive tensioner.
Fig. 2 is a diagram of the belt drive system layout with an inventive tensioner.
Fig. 3 is a control logic diagram.
Fig. 4 is a front side perspective view of an inventive tensioner.
Fig. 5 is a rear side perspective view of an inventive tensioner.
Fig. 6 partial cut-away view of an inventive tensioner.
Fig. 7 is a front perspective partial cut-way view of an inventive tensioner.
Fig. 8 is a side partial cut-away view of the inventive tensioner.
Fig. 9 is a partial front perspective view of the moveable spring attachment member.
Fig. 10 is a partial front perspective view of the tensioner base and the moveable spring attachment member.
Fig. 11 is a partial front perspective view of a spring and tensioner base.
Fig. 12 is a partial cut-away view of the inventive tensioner.
Fig. 13 is a detail of a damping mechanism.
Fig. 14 is a cross-section of Fig. 13 at line 14-14.
Fig. 15 is a detail of a damping mechanism.
Fig. 16 is a cross-section of Fig. 15 at line 16-16.

### Detailed Description of the Preferred Embodiment

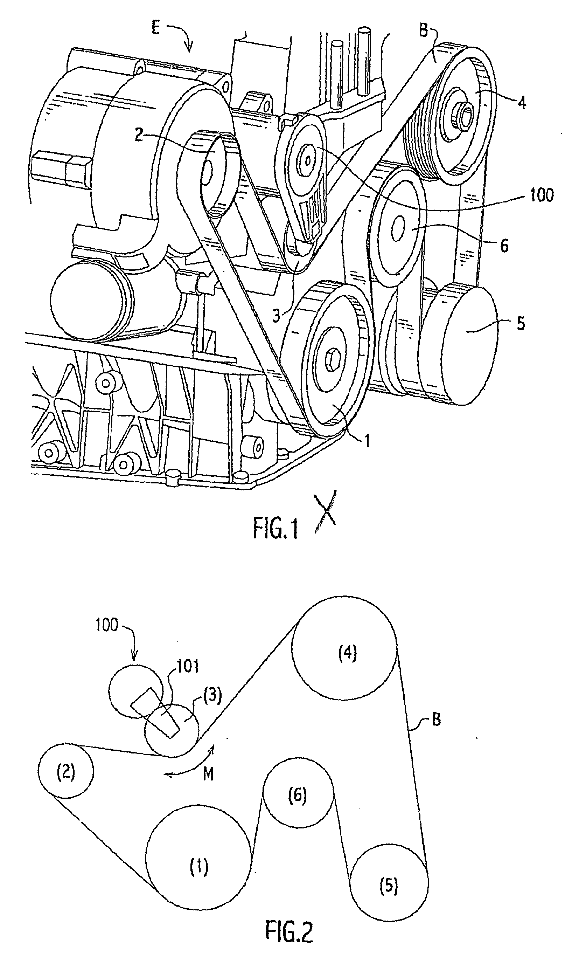

Fig. 1 is a front perspective view of an engine with an inventive tensioner. Tensioner 100 is a component part of a front end accessory drive (FEAD) for an engine E. An FEAD generally comprises one or more accessories driven by a belt. Belt B is trained about a number of pulleys 1, 2, 4, 5, 6. Each pulley is connected by a rotating shaft to an engine accessory component. For example, in Fig. 1, 1 is connected to the crankshaft, 2 is connected to an alternator or starter-generator, 4 is connected to a power steering pump, 5 is connected to a vaporous refrigerant compressor, and 6 is connected to a water pump. Pulley 3 is connected to the arm of the inventive tensioner 100.

Fig. 2 is a diagram of the belt drive system layout with an inventive tensioner. Each of the components described for Fig. 1 are shown schematically in Fig. 2. Arm 101 of tensioner 100 has a movement M in order to control a belt tension.

The inventive tensioner can be installed in any span of a belt system. The tensioner's position in the FEAD system depends upon the number and type of accessories included in the particular FEAD system. For example, in a particularly demanding system such as a starter-generator system, the inventive tensioner can be installed on the immediate adjacent span 'downstream' of the starter-generator 2 as shown in Fig. 2. Of course, the inventive tensioner can be installed in any span of the FEAD system and its position will depend upon the number and type of components.

When a prior art tensioner is used in the described position, a very high belt tension must be maintained at all times in order to assure proper system operation in the worst case load situation, that is, during generator/starter load under high engine acceleration.

Unlike the prior art, the inventive tensioner continuously adjusts belt tension so as to provide only the tension needed for proper system operation at any given time. The inventive tensioner can operate at a low belt tension during most operating conditions, for example 350N, only applying a proper high belt tension during conditions such as described above, i.e., during generator-starter load under high engine acceleration or when all of the accessories are loaded. This allows a high belt tension to be applied only when needed. The inventive tensioner keeps the belt tension low when the engine is off as well. Operating in this manner results in an increase in operating life of the belt, bearings, and other system components since peak tensions are only applied as needed for a short period of time.

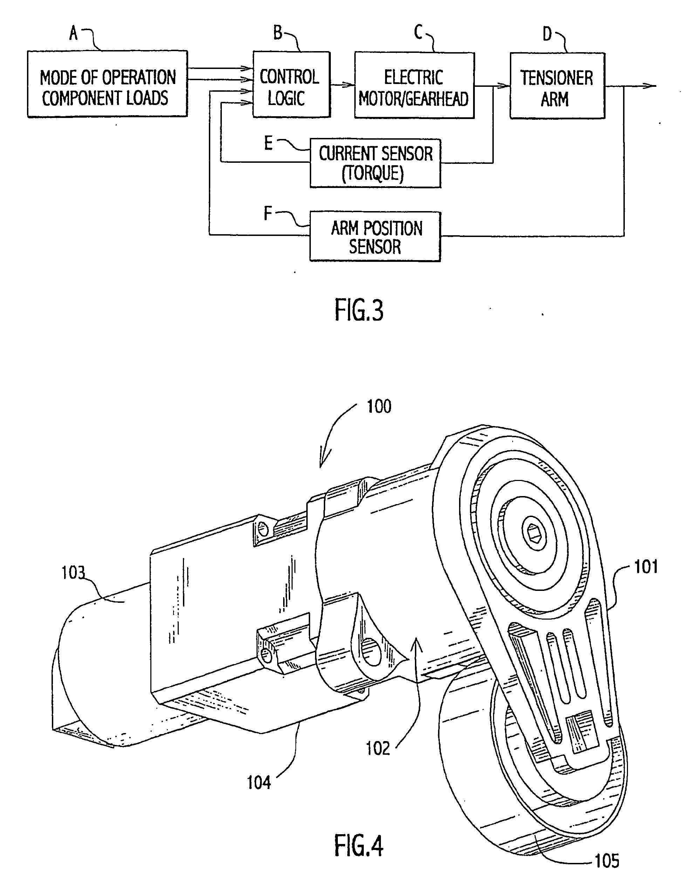

Fig. 3 is a control logic diagram. Inputs shown in box (A) include exemplary control parameters that may be established by a user or set automatically by a control system. For example, a mode of operation can include engine following which means that the biasing member position, and thereby belt load or tension, is set according to an engine operating parameter, for example, engine speed or load. Another input useful for setting a tensioner load is the load condition for each accessory. Of course, other parameters or variables may be selected such as a combination of accessory loads coupled with ambient temperature, throttle position, engine speed, brake position, On-Off air conditioner signals, and so on.

Belt slip may also be measured as a direct means of determining a belt operating tension. A "low" tension will allow a belt to slip on a pulley. A proper belt tension prevents belt slip on a pulley. Belt slip may be detected by noise emission, or by a differential rotational speed between two or more accessories. In the later case the rotating shaft for each accessory is instrumented in order to detect the shaft speed of each.

In an FEAD system where only one belt drives all accessories, there is only a single instance where maximum belt tension is needed to transmit power to all system components. This occurs when all accessory components are operating at full load and the engine is experiencing high acceleration. This also corresponds to the maximum belt tension requirement for the FEAD system. This condition requires the maximum belt tension and the tensioner is adjusted accordingly. As each component is loaded, the belt tension is incrementally increased to prevent belt slip and maintain a proper torque carrying capacity. The belt tension is incrementally reduced for each accessory component that is not loaded, or as each is unloaded.

In box (B) the input variables are analyzed by the system control logic. An exemplary control module used to implement the control logic comprises a Micro LYNX 4™ processor. The control module is programmable by a user and comprises a processor and memory capability. An encoder at the motor shaft generates 256 pulses per shaft revolution which is sufficient for setting a belt tension, although a higher or lower number of pulses per revolution may be used depending on a system design.

The processor (B) uses the inputs from (A) to calculate a desired belt tension. Once the belt tension is calculated, the processor calculates a required position for one end of the biasing member which corresponds to the desired belt tension. In general, the belt tension is increased as accessories are turned on and is decreased as accessories are turned off, and/or, as engine accelerations and deccelerations occur.

The control logic then sends a signal to the tensioner actuator, in this case, electric motor (C). The electric motor is operated in order to properly position the end of the biasing member connected to the gearbox (D). The electric motor is stopped once the appropriate feedback variable is received from the sensors, for example motor current (E) or arm position (F).

System control is accomplished by use of feedback from a motor current monitor or sensor (E), and from an arm position monitor or sensor (F). The current sensor and the arm position sensor are each electrically connected to the controller processor. Arm position sensor may be any one of a number of such position sensors known in the art.

The current sensor detects a motor amperage. An increase in motor amperage over a prior or steady state value reflects an increase in arm load and a commensurate increase in belt tension. A decrease in motor amperage from a prior or steady state value reflects a decrease in load on the tensioner arm and a decrease in belt tension. Each of these signals is provided to the controller (B). The processor compares the values for current sensor and arm position against an over/under look-up table stored in a processor memory in order to stop operation of the motor once the required value is received. Should the values be exceeded, the motor may be shut down to avoid damaging the system.

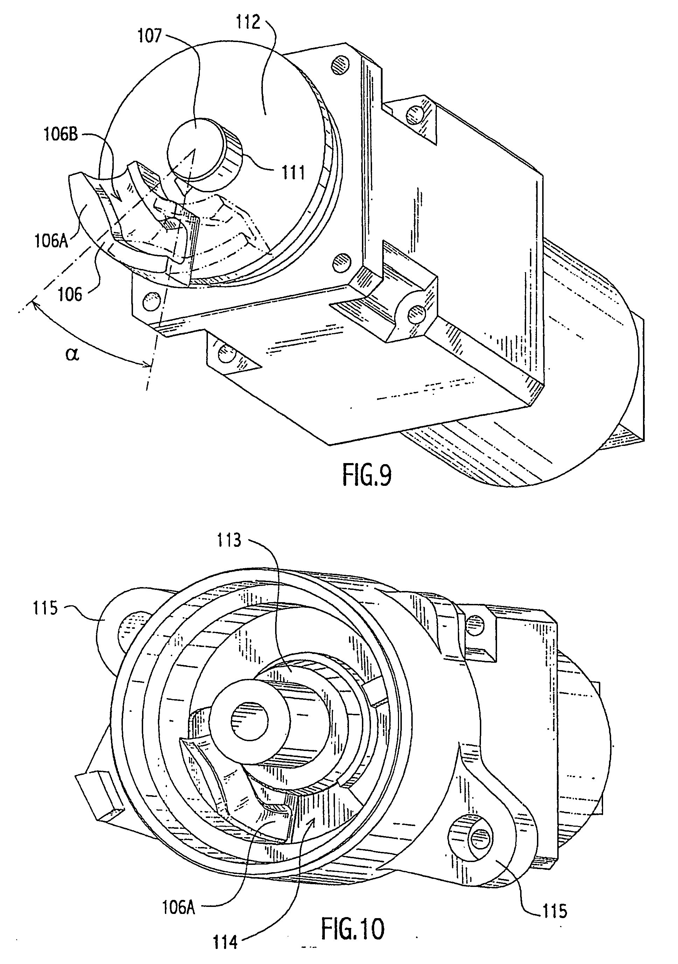

By way of example and not of limitation, the inventive tensioner and system operates in a belt tension range of approximately 300N to 700N. This corresponds to a spring attachment member 106 angular rotation α, see Fig. 9, of approximately 40° based upon a tensioner arm length of 75mm and a pulley diameter of 76mm. These values are presented as examples and not by way of limitation. By moving member 106, the gearbox 'winds' or 'unwinds' the spring 109, thereby increasing or decreasing a spring force exerted on the tensioner arm and the belt. More particularly, the 300N position is a function of the spring rate and corresponds approximately to the α=0° position. The 700N position corresponds approximately to the α=40° position. The spring rate may be adjusted up or down to vary the angular rotation α needed for member 106 as well.

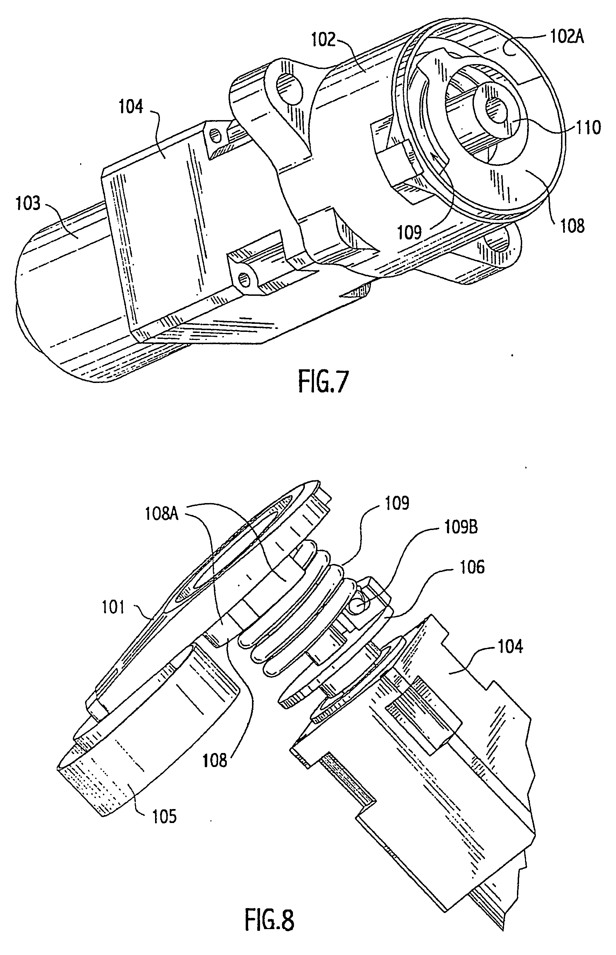

In operation the tensioner provides a belt tension as well as damping. The tensioner has a damping coefficient as required by the system. An exemplary value of approximately 23% is utilized in the instant system, and it is asymmetric. Of course, other damping coefficients may be realized by changing a coefficient of friction of the damping mechanism surfaces 108a, see Fig. 8. Asymmetric refers to a damping coefficient being greater in a tensioner arm loading direction as compared to a tensioner arm unloading direction during operation of the FEAD system. A loading direction is the direction opposite that of a spring force and has the effect of increasing a load on the tensioner arm. An unloading direction is opposite that of a loading direction. The system may also be operated using damping that is not asymmetric, wherein the damping is approximately equal in the loading and unloading directions.

Fig. 4 is a front side perspective view of an inventive tensioner. Tensioner 100 comprises tensioner body 102 and tensioner arm 101. Pulley 105 is journaled to an end of tensioner arm 101. Pulley 105 engages a belt B as shown in Fig. 2. Electric motor 103 is attached to one end of gearbox 104. Tensioner body 102 is connected to the other end of gearbox 104.

Electric motor 103 comprises a DC stepper motor having a voltage range of 12-50V. By way of example and not of limitation, the motor has a continuous torque of 0.6Nm and a peak transient torque of 4.3Nm. The gearbox has a reduction ratio of 100:1 and a torque capacity of 75Nm. The electrical requirements of the electric motor are provided by the engine electrical system, for example, by an engine alternator or generator or battery.

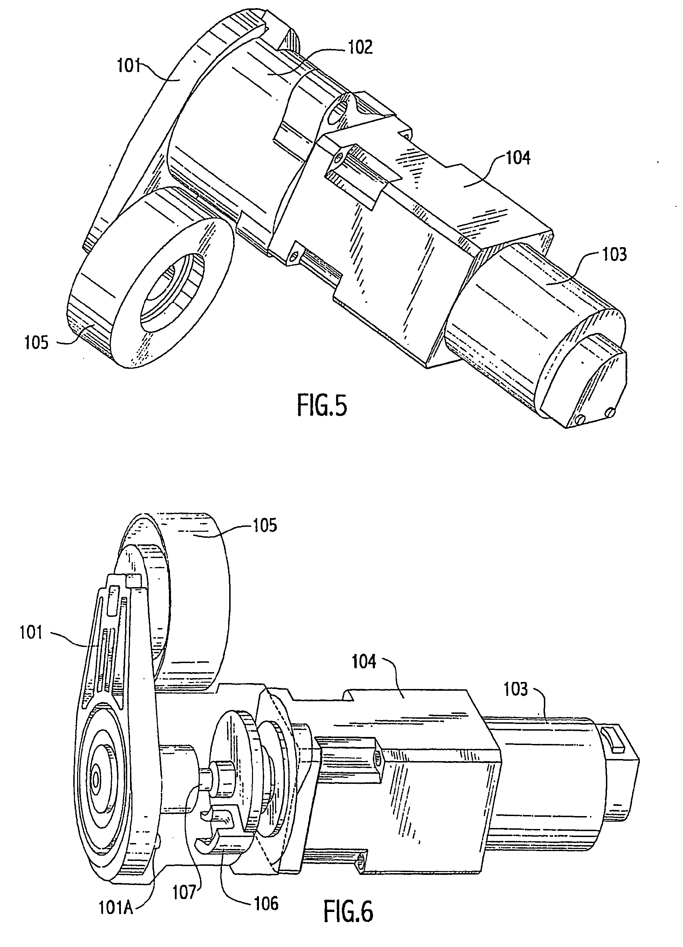

Fig. 5 is a rear side perspective view of an inventive tensioner. Pulley 105 is shown underhung but may also be overhung on the opposing surface of tensioner arm 101 as well to accommodate an FEAD system layout.

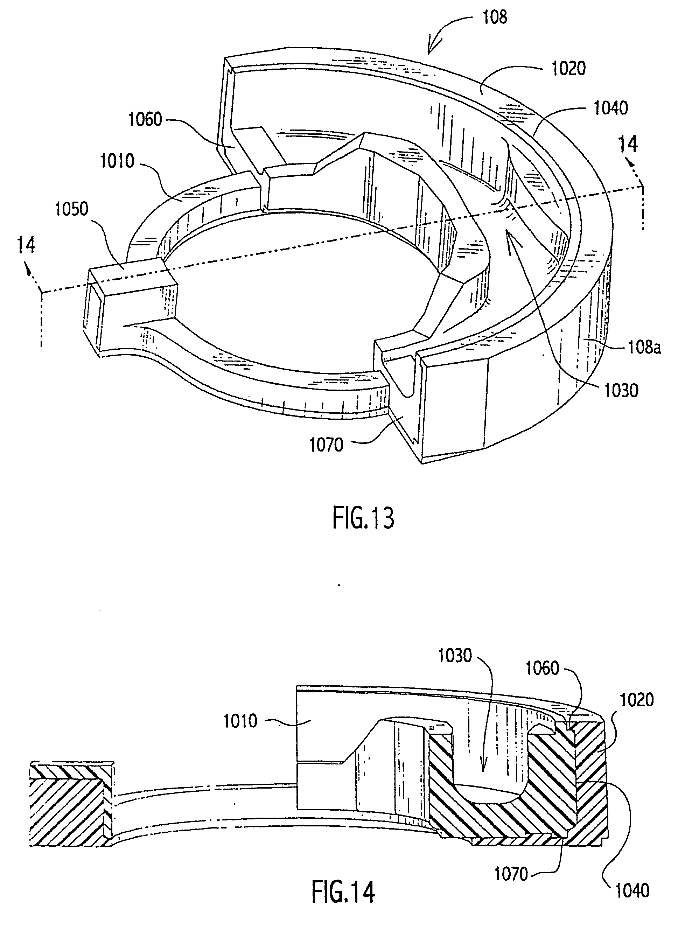

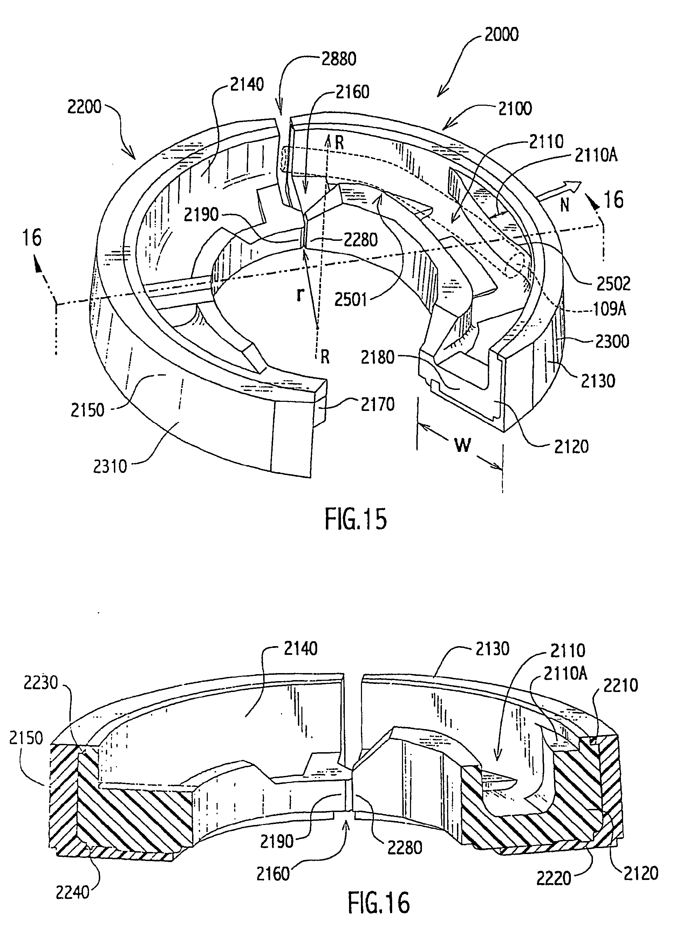

Fig. 6 partial cut-away view of an inventive tensioner. Spring attachment member 106 is connected to gearbox output shaft 107. Gearbox output shaft 107 determines a position of spring attachment member 106. Post 101a on arm 101 engages the damping mechanism 108, see Fig. 13 and Fig. 15. A spring force is transmitted to arm 101 through contact of the damping member 108 with post 101a. Arm 101 is co-axially aligned with, and has an axis of rotation about shaft 107. However, arm 101 is not mechanically constrained to rotate simultaneously with shaft 107.

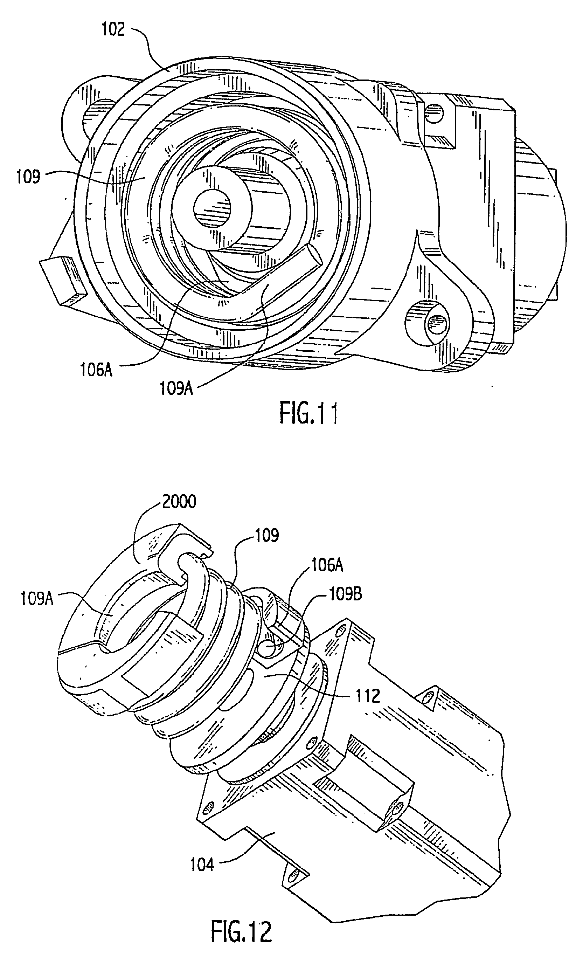

Fig. 7 is a front perspective partial cut-way view of an inventive tensioner. One end of spring 109 is engaged with spring attachment member 106, see Figs. 6 and 12. The other end of spring 109 is engaged with damping mechanism 108, see Fig. 13 and Fig. 14.

Spring 109 comprises a torsional spring having a predetermined spring rate. The spring rate may be selected depending upon the system belt tension needs. Pivot 110 is connected to tensioner base 102. Tensioner arm 101 is rotatably engaged with pivot 110 to transmit a belt load to the base.

Fig. 8 is a side partial cut-away view of the inventive tensioner. The orientation of spring 109 with respect to spring attachment member 106 is shown. Spring end 109b is engaged with member 106. Spring end 109a is also engaged with damping mechanism 108. Damping mechanism 108 is engaged with arm 101 at post 101a, see Fig. 6. Damping mechanism surfaces 108a frictionally engage a cooperating arcuate inner surface 102a of tensioner body 102, see Fig. 7.

Fig. 9 is a partial front perspective view of the moveable spring attachment member. Spring attachment member 106 comprises a spring end receiving portion 106a. Receiving portion 106a comprises a slot or groove 106b which engages spring end 109b. Gearbox output shaft 107 is connected to rotatable member 112, to which member spring attachment member 106 is connected. Spring attachment member 106 is rotatable with an angular movement α by a rotation of shaft 107. Shaft 107 is rotatable in either a clockwise or counterclockwise direction, depending upon a spring wind direction. Shaft bushing 111 rotates in a corresponding recess 113 in tensioner body 102, see Fig. 10. The angular movement of member 106 adjusts or changes a position of spring 109. Movement in a first direction increases a force on the arm and thereby a belt tension. A movement of member 106 in a direction opposite the first direction decreases a belt tension. The first direction may either be clockwise or counterclockwise depending upon the wind direction of the spring 109. The range of angular movement α can be up to 360° or more.

Fig. 10 is a partial front perspective view of the tensioner base and the moveable spring attachment member. Spring receiving portion 106a projects into tensioner base 102 through arcuate slot 114 in a bottom of tensioner base 102. Spring receiving portion 106a is therefore moveable relative to the tensioner body 102 within arcuate slot 114. Such movability of spring receiving member 106 allows a spring end position and spring force to be set. This determines a tensioner arm position, which in turn determines a belt tension. Tensioner 100 is attached to an engine surface using threaded fasteners applied through mounting brackets 115.

Fig. 11 is a partial front perspective view of a spring and tensioner base. Spring 109 is shown installed in the tensioner body 102 with end 109b engaged with spring receiving portion 106a. Spring end 109a engages damping mechanism 108, see Figs. 13 and 15.

Fig. 12 is a partial cut-away view of the inventive tensioner. End 109b of spring 109 is shown engaged with spring receiving portion 106a. End 109a of spring 109 is engaged with an alternate damping mechanism 2000, see Figs. 15, 16. Spring receiving member 106 is connected to member 112 and thereby to gearbox output shaft 107. The damping mechanism shown in this Fig. 12, and Fig. 15 and Fig. 16, is an alternate embodiment to that depicted in Fig. 7, Fig. 13 and Fig. 14.

Fig. 13 is a detail of a damping mechanism. Damping mechanism 108 comprises damping band 1020. Damping band 1020 is connected to an outer arcuate surface 1040 of damping shoe 1010. Spring, or biasing member, receiving portion comprises a slot 1030 in damping shoe 1010. Receiving portion or slot 1030 receives spring end 109a, see Fig. 11, of spring 109. Surface 1050 engages a portion of a coil of a spring to provide support during operation. Damping band 1020 comprises a plastic such as nylon, PA and PPA, and their equivalents. Post 101a shown in Fig. 6 contacts damping mechanism 108 at either 1060 or 1070 depending upon the direction or spring wind or of movement of arm 100. A spring force by which the belt tension is created is transmitted from spring 109 to arm 101 through contact between the damping mechanism 108 and post 101a. Frictional surface 108a engages an inner cooperating surface 102a of tensioner base 102. This embodiment comprises an asymmetric damping characteristic as described elsewhere in this specification. The damping mechanism described herein is also described in co-pending U.S. patent application serial number 10/147,183 filed May 15, 2002, which description is incorporate herein by reference.

Fig. 14 is a cross-section of Fig. 13 at line 14-14. Ring cut 1060 extends about an outer perimeter of outer arcuate surface 1040. Rim or protrusion 1070 extends about a partial circumference of damping shoe 1010. Ring cut 1060 in combination with protrusion 1070 serve to mechanically attach damping band 1020 to damping shoe 1010.

Fig. 15 is a detail of a damping mechanism. Damping mechanism 2000 comprises a first arcuate member 2100 and a second arcuate member 2200. First arcuate member 2100 has a spring end receiving portion or slot 2110 into which a spring end 109a is engaged. Spring end 109a engages slot 2110 in two points, namely at 2501 and 2502. This results in a normal force N being created to press damping mechanism arcuate member 2100 against the base inner surface 102a. This embodiment comprises an asymmetric damping characteristic as described elsewhere in this specification.

With respect to spring end 109a, referring to Fig. 13, spring end 109a engages slot 1030 in the same manner as described in this Fig. 15.

A wall of the spring receiving portion has maximum thickness 2110a at the spring contact area for increased strength. Wall 2110a may be tapered from the contact area in one direction or in both directions as it extends in both directions. The damping mechanism described herein is also described in co-pending U.S. patent application serial number 10/147,183 filed May 15, 2002, which description is incorporate herein by reference.

First arcuate member 2100 comprises a damping band 2130 attached to a damping shoe 2120. Second arcuate member 2200 comprises a damping band 2150 attached to a damping shoe 2140.

First arcuate member 2100 is in pivotal contact with the second arcuate member 2200 at a point of contact 2160. Point of contact 2160 comprises end 2280 of damping shoe 2120 and end 2190 of damping shoe 2140. Point of contact 2160 may be varied from a minimum radius (r) to a maximum radius across a width W of each damping shoe according to the needs of a user.

End 2170 of arcuate member 2200 is in contact with post 101a on arm 101, see Fig. 12 and Fig. 6. This arrangement results in arcuate member 2200 being subjected to a greater load than arcuate member 2100.

In order to achieve a desired asymmetric damping factor, point of contact 2160 between the arcuate members is located at a predetermined radial distance, r, from a lever arm axis of rotation R-R. A minimum radius location (r) for point of contact 2160 results in the highest asymmetric damping factor for the damping mechanism. Point of contact 2160 may be disposed at a maximum outer radius (2880) which produces a lesser asymmetric damping factor as compared to a foregoing minimum radius location, (r).

In an alternate embodiment end 2180 of first arcuate member 2100 is in contact with the second arcuate member end 2170. Post 101a is then in contact with arcuate member 2200 at point 2160. In this alternate embodiment, a spring having a coil wind direction opposite that used for the embodiment shown in Fig. 12 and Fig. 15 is used. Therefore, by switching the point of contact between the arcuate members from one end of the first arcuate member (2180) and second arcuate member to the other end (2160), a torsional spring having an opposite wind can be used.

Damping band 2130, 2150 are made of frictional material such as plastics, phenolics and metallics. A working surface 2300, 2310 of damping band 2300, 2150 respectively is slideably engaged under pressure with a tensioner base surface 102a, see Fig. 12. A frictional damping force is generated as the damping band slides on the tensioner base surface.

Damping shoes 2120, 2130 are each made of structural material such as steel, molded plastic or equivalents thereof. Each damping shoe can be manufactured by utilizing a powder metal process, a die cast process, injection molding or similar processes. Materials that can be used include steel, aluminum (for low load parts), thermoplastics with various fillers, and equivalents thereof.

Damping band 2150 of the second arcuate member has a material thickness greater than the damping band 2130 of the first portion. This has two advantages, first, increased spring hook-up size (and spring thickness) can be realized, therefore a spring having a greater spring rate can be used. The greater spring rate spring results in the ability to generate a greater belt tension. Second, since the second portion 2200 of the damping mechanism has higher load than the first portion 2100, a reduced thickness of the first damping band 2130 will equalize durability and wear life of both parts.

Fig. 16 is a cross-section of Fig. 15 at line 16-16. Ring cut 2210 extends about an outer perimeter of damping shoe 2120. Protrusion 2220 extends about a partial circumference of damping shoe 2120. Ring cut 2230 extends about an outer perimeter of damping shoe 2140. Protrusion 2240 extends about a partial circumference of damping shoe 2140. Each ring cut 2210, 2230 in combination with each protrusion 2220, 2240 serve to mechanically attached each damping band 2130, 2150 to each damping shoe 2120, 2140 respectively.

Although forms of the invention have been described herein, it will be obvious to those skilled in the art that variations may be made in the construction and relation of parts without departing from the scope of the invention described herein.

## Claims

1. A tensioner (100) comprising:
a base (102);
an arm (101) pivotably engaged with the base (102);
a pulley (105) journaled to the arm (101);
a driver member connected to another end of a biasing member (109b) such that a biasing member (109) position is adjustable by a driver member angular movement; and **characterized in that** the biasing member (109) is having an end (109a) engaged to a damping member (108);
the damping member (108) is engaged with the arm (101) and frictionally engaged with the base (102) to damp an arm (101) movement; the driver member comprises
a controller generating a signal for adjusting a biasing member (109) position,
wherein the damping member (108) comprises an asymmetric damping coefficient comprising a damping coefficient greater in an arm loading direction as compared to an arm unloading direction.

2. The tensioner (100) as in claim 1 wherein the driver member further comprises an actuator.

3. The tensioner (100) as in claim 1 wherein the driver member comprises an electric motor (103).

4. The tensioner (100) as in claim 3, wherein the damping member (108) comprises an arcuate surface (1040) in frictional contact with a base arcuate surface.

5. The tensioner (100) as in claim 3 further comprising:
the controller for processing an input signal from a sensor and for generating and transmitting a control signal to the electric motor, whereby an arm position is controlled.

6. The tensioner (100) as in claim 5 further comprising:
a sensor for detecting an arm (101) position; and the sensor connected to the controller.

7. The tensioner (100) as in claim 6 further comprising;
a sensor for detecting an electric motor amperage; and the sensor connected to the controller.

8. The tensioner (100) as in claim 1, wherein the driver member comprises:
a transmission (107); and an electric motor (103) connected to the transmission.

9. The tensioner (100) as in claim 8 further comprising:
a motor amperage monitor; and the motor amperage monitor connected to the controller whereby the motor (103) operation is controlled.

10. The tensioner (100) as in claim 8 further comprising:
an arm (101) position monitor for detecting an arm (101) position; and the arm (101) position monitor connected to the controller whereby an arm (101) position is controlled.

## Patentansprüche

1. Spanner (100), umfassend:
eine Basis (102);
einen Arm (101), der schwenkbar mit der Basis (102) in Eingriff steht;
eine Riemenscheibe (105), die am Arm (101) gelagert ist;
ein Antriebsglied, das mit einem anderen Ende eines Vorspannglieds (109b) so verbunden ist, dass eine Position des Vorspannglieds (109) durch eine Winkelbewegung des Antriebsglieds einstellbar ist; und **dadurch gekennzeichnet, dass**
das Vorspannglied (109) ein Ende (109a) aufweist, das mit einem Dämpfungsglied (108) in Eingriff steht;
das Dämpfungsglied (108) mit dem Arm (101) in Eingriff steht und mit der Basis (102) in Reibeingriff steht, um eine Bewegung des Arms (101) zu dämpfen;
das Antriebsglied eine Steuerung umfasst, die ein Signal zur Einstellung einer Position des Vorspannglieds (109) erzeugt, wobei das Dämpfungsglied (108) einen asymmetrischen Dämpfungskoeffizienten umfasst, der einen Dämpfungskoeffizienten umfasst, der in einer Armbelastungsrichtung größer ist als in einer Armentlastungsrichtung.

2. Spanner (100) nach Anspruch 1, wobei das Antriebsglied weiterhin einen Aktuator umfasst.

3. Spanner (100) nach Anspruch 1, wobei das Antriebsglied einen Elektromotor (103) umfasst.

4. Spanner (100) nach Anspruch 3, wobei das Dämpfungsglied (108) eine bogenförmige Fläche (1040) umfasst, die mit einer bogenförmigen Basisfläche in Reibkontakt steht.

5. Spanner (100) nach Anspruch 3, der weiterhin Folgendes umfasst:
die Steuerung zur Verarbeitung eines Eingangssignals von einem Sensor und zur Erzeugung und Übertragung eines Steuersignals zu dem Elektromotor, wodurch eine Armposition gesteuert wird.

6. Spanner (100) nach Anspruch 5, der weiterhin Folgendes umfasst:
einen Sensor zur Erfassung einer Position des Arms (101), wobei der Sensor mit der Steuerung verbunden ist.

7. Spanner (100) nach Anspruch 6, der weiterhin Folgendes umfasst:
einen Sensor zur Erfassung einer Elektromotorstromstärke, wobei der Sensor mit der Steuerung verbunden ist.

8. Spanner (100) nach Anspruch 1, wobei das Antriebsglied
ein Getriebe (107) und einen mit dem Getriebe verbundenen Elektromotor (103) umfasst.

9. Spanner (100) nach Anspruch 8, der weiterhin eine Motorstromstärkeüberwachungsvorrichtung umfasst; wobei die Motorstromstärkeüberwachungsvorrichtung mit der Steuerung verbunden ist, wodurch der Betrieb des Motors (103) gesteuert wird.

10. Spanner (100) nach Anspruch 8, der weiterhin eine Vorrichtung zur Überwachung der Position des Arms (101) zur Erfassung einer Position des Arms (101) umfasst, wobei die Vorrichtung zur Überwachung der Position des Arms (101) mit der Steuerung verbunden ist, wodurch eine Position des Arms (101) gesteuert wird.

## Revendications

1. Tendeur (100), comprenant :
une base (102) ;
un bras (101) engagé de manière pivotante avec la base (102) ;
une poulie (105) tourillonnée sur le bras (101) ;
un organe d'entraînement connecté à une autre extrémité d'un organe de sollicitation (109b) de telle sorte qu'un organe de sollicitation (109) puisse être ajusté en position par un mouvement angulaire de l'organe d'entraînement ; et
**caractérisé en ce que** l'organe de sollicitation (109) a une extrémité (109a) engagée avec un organe d'amortisseur (108) ;
l'organe d'amortisseur (108) est engagé avec le bras (101) et est engagé par friction avec la base (102) pour amortir un mouvement du bras (101) ;
l'organe d'entraînement comprend un contrôleur générant un signal pour ajuster l'organe de sollicitation (109) en position, l'organe d'amortissement (108) comprenant un coefficient d'amortissement asymétrique comprenant un coefficient d'amortissement supérieur dans une direction de chargement du bras que dans une direction de déchargement du bras.

2. Tendeur (100) selon la revendication 1, dans lequel l'organe d'entraînement comprend en outre un actionneur.

3. Tendeur (100) selon la revendication 1, dans lequel l'organe d'entraînement comprend un moteur électrique (103).

4. Tendeur (100) selon la revendication 3, dans lequel l'organe d'amortissement (108) comprend une surface arquée (1040) en contact de friction avec une surface arquée de la base.

5. Tendeur (100) selon la revendication 3, comprenant en outre :
le contrôleur pour traiter un signal d'entrée provenant d'un capteur et pour générer et transmettre un signal de commande au moteur électrique, une position du bras étant ainsi contrôlée.

6. Tendeur (100) selon la revendication 5, comprenant en outre :
un capteur pour détecter une position d'un bras (101) ; et le capteur étant connecté au contrôleur.

7. Tendeur (100) selon la revendication 6, comprenant en outre :
un capteur pour détecter une intensité du moteur électrique ; et le capteur étant connecté au contrôleur.

8. Tendeur (100) selon la revendication 1, dans lequel l'organe d'entraînement comprend :
une transmission (107) ; et un moteur électrique (103) connecté à la transmission.

9. Tendeur (100) selon la revendication 8, comprenant en outre :
un dispositif de surveillance de l'intensité du moteur ; le dispositif de surveillance de l'intensité du moteur étant connecté au contrôleur de manière à contrôler le fonctionnement du moteur (103).

10. Tendeur (100) selon la revendication 8, comprenant en outre :
un dispositif de surveillance de la position d'un bras (101) pour détecter la position d'un bras (101) ; et le dispositif de surveillance de la position d'un bras (101) étant connecté au contrôleur de manière à contrôler la position d'un bras (101).
